# EUROPEAN PATENT APPLICATION

(11) **EP 1 398 971 A1**
(43) Date of publication of application: **17.03.2004**
(21) Application number: 03255533.6
(22) Date of filing: 04.09.2003
(51) Int. Cl.: H04N 7/26

(54) **Video encoding and decoding**

(30) Priority: 12.09.2002 JP 2002267122
(71) Applicant: SONY CORPORATION, Tokyo 141 (JP)
(72) Inventor: Hashino, Tsukasa, Shinagawa-ku Tokyo 141 (JP); Sugiyama, Akira, Shinagawa-ku Tokyo 141 (JP)
(74) Representative: Turner, James Arthur

(57) **Abstract**

An arithmetic block generates a sum and a difference signal between the frames of image signals for every two frames from input image signal. A bit rate proportion control block generates control signals for controlling the encoding bit rate proportion of the sum and the difference signal based on the sum and the difference signal. An encoding block generates an encoded sum signal with the encoding bit rate based on the control signal from the sum signal using the encoding process wherein the encoding bit rate can be altered on the basis of the control signals. An encoding block also generates an encoded difference signal with the encoding bit rate based on the control signal from the difference signal.

## Description

This invention relates to an apparatus, a method, and a program for encoding.

In television broadcasting, with transition to digital broadcasting, the following image signals have come into use: (1) an image signal called 525/60i which has 525 scan lines at a field frequency of 59.94 Hz; (2) an image signal called 625/50i which has 625 scan lines at a field frequency of 50 Hz; (3) an image signal called 525/60p which is prescribed to be 525 scan lines at a frame frequency of 59.94 Hz; (4) an image signal called 720/60p which is prescribed to be 720 effective scan lines at a frame frequency of 59.94 Hz; and (5) an image signal called 1080/60i which is prescribed to be 1080 effective scan lines at a field frequency of 59.94 Hz.

Because such the 525/60p, 720/60p, and 1080/60i image signals contain larger amount of data and have higher resolutions than those of the 525/60i and 625/50i image signals, an encoding apparatus enabling a high ratio of compression while keeping image quality high has necessitated. For example, if attempts are made to encode the 525/60p image signal with intra-frame encoding that is used for video tape recorders and the like, then the frame signal frequency will be double the corresponding frequency for the 525/60i image signal, that is, the amount of image data will be double accordingly. Therefore, in order to perform high quality encoding, quite a high bit rate is required. In view hereof, in order to raise the efficiency of encoding, for example, Japanese Published Unexamined Patent Application No. Hei 5-300491 has proposed rearranging a sequence of transform coefficients that are obtained through orthogonal transformation of pixels in a predetermined order when encoding the transform coefficients. According to Japanese Published Unexamined Patent Application No. Hei 6-292179, comparison is made between summation of absolute values of frame-to-frame differences and summation of absolute values of field-to-field differences to reduce the amount of data effectively. Based on the result of this comparison, intra frame orthogonal transformation or intra field orthogonal transformation is performed. These two Japanese Published Unexamined Patent Applications have no corresponding application filed in United States of America.

Meanwhile, encoding technology continues to be enhanced to achieve higher image quality and higher efficiency. Thus, desirably, encoding and decoding apparatuses can be configured to make use of diverse types of encoding and decoding techniques with ease. However, in order to rearrange the transform coefficients and change over between different transformation modes, configuration with dedicated encoding and decoding circuits is required. Thus, such configuration makes it difficult to make use of diverse types of image compression techniques and the like with ease.

As for video distributed in package media and through communication channels, a so-called long group of pictures (long-GOP) is organized with a plurality of frames in order to raise the efficiency of encoding. Some of the frames are simply encoded without being subjected to predictive coding (intra-frame coding), and some of the frames are motion predictively encoded with one or more predictive frames existing in either one or both of directions (inter-frame coding). By assembling frames in the long-GOP, a high compression ratio can be achieved. However, for original image signals before being edited in the long-GOP frames, when clipping an image signal out of a desired frame position, an edit is performed in GOP units and, consequently, edit precision decreases. In order to enhance the edit precision, it is necessary to decode the encoded signals temporarily and the edit precision cannot be enhanced easily. Besides, in order to generate frames by using predictive motion coding (inter-frame coding), heavy load processing such as detecting motion vectors and motion compensation must be performed and greater circuit size is required accordingly.

Various respective aspects and features of the invention are defined in the appended claims. Features from the dependent claims may be combined with features of the independent claims as appropriate and not merely as explicitly set out in the claims.

Embodiments of this invention can provide an apparatus, a method, and a program for encoding images, for example by encoding sum and difference signals of images of succeeding frames to generate encoded signals and an apparatus, a method, and a program for decoding encoded images, which enable edition with high precision compatible with high image quality and a high compression ratio and make it possible to use diverse types of image compression techniques with ease.

According to a first aspect of the invention, a method is provided for encoding a moving video signal comprising a plurality of images. Each image has a plurality of pixels. The method comprises steps of generating a sum signal and a difference signal of images for every two frames, and deciding an encoding bit rate for the sum signal and the difference signal based on the sum signal and the difference signal. The method also comprises a step of encoding the sum signal and the difference signal respectively based on the encoding bit rate thus decided.

Thus, according to the first aspect of this invention, encoding is performed on a two-frame basis and the sum signal of the two frames and the frame-to-frame difference signal are encoded while the encoding bit rates of the sum and difference signals are controlled, thus generating output signals. Consequently, the output signal bit rate can be decreased without degrading image quality or decoded image quality can be enhanced without increasing the bit rate. Because the encoded signals are generated on a two-frame basis, an edit with high precision can be performed even with encoded output signals.

Further, according to the first aspect of the invention, the sum signal encoding bit rate and the difference signal encoding bit rate are controlled, based on variation in the signal levels of each of the pixels in the sum signal and the difference signal or the encoded data quantities of the sum signal and the difference signal. Therefore, the sum signal encoding bit rate and the difference signal encoding bit rate can be set optimum.

In accordance with a second aspect of the invention, the foregoing and other objects are also attained by an apparatus for encoding a moving video signal comprising a plurality of images. The apparatus comprises a generating element for generating a sum signal and a difference signal of images for every two frames and a deciding element for deciding an encoding bit rate for the sum signal and the difference signal based on the sum signal and the difference signal. The apparatus further comprises an encoding element for encoding the sum signal and the difference signal respectively based on the encoding bit rate.

According to the second aspect of the invention, simple hardware configurations for encoding and decoding are possible because of no need for high load processing such as detecting motion vectors. Moreover, because it is only required for the encoding of the present invention that encoding bit rates can be controlled, diverse types of image compression techniques can be adopted in the encoding with ease.

Further, in a third aspect of this invention, performed is the encoding on either the sum signal or the different signal and then performed is the encoding on the other signal. Thus, serial encoding in which either the sum signal or the difference signal is first encoded and, successively, the other signal is encoded may be performed in this invention. This dispenses with double encoding circuits, one for the sum signal and the other for the difference signal, thereby allowing simple hardware configurations to be obtained.

In accordance with a fourth aspect of the invention, the foregoing and other objects are also attained by a method for decoding encoded data by encoding a moving video signal comprising a plurality of images. Each image has a plurality of pixels. The encoded data has been generated by encoding a sum signal of images and a different signal of images according to the above method for encoding images. The method comprises steps of decoding the encoded data to generate a decoded sum signal and a decoded different signal, generating two-frame images using the decoded sum signal and the decoded different signal, and outputting the two-frame images in a prescribed order to generate a decoded moving video signal.

In accordance with a fifth aspect of the invention, the foregoing and other objects are also attained by an apparatus for decoding encoded data by encoding a moving video signal comprising a plurality of images. The encoded data also has been generated by encoding a sum signal of images and a different signal of images according to the above method for encoding. The apparatus comprises an element for decoding the encoded data to generate a decoded sum signal and a decoded different signal, and an element for generating two-frame images using the decoded sum signal and the decoded different signal. The apparatus comprises an element for outputting the two-frame images in a prescribed order to generate a decoded moving video signal.

Since, in the encoding of a moving video signal, a step of, and an adjustment element for adjusting a level of either the sum signal or the different signal, and data to adjust a level of either of them may be provided, decoding operation can be simplified according to the fourth and fifth aspects of the invention. This is because the levels of the sum signal and the difference signal have already been adjusted before these signals are encoded and proper decoding can be performed by only addition and subtraction of these signals. Because adjustment is made for the levels of the sum signal and/or difference signal reproduced by decoding, it can be ensured that the image signals of two frames reproduced by decoding have proper signal levels.

The concluding portion of this specification particularly points out and directly claims the subject matter of the present invention. However those skill in the art will best understand both the organization and method of operation of the invention, together with further advantages and objects thereof, by reading the remaining portions of the specification in view of the accompanying drawing(s) wherein like reference characters refer to like elements.

The invention will now be described by way of example with reference to the accompanying drawings, throughout which like parts are referred to by like references, and in which:
FIGS. 1A and 1B are diagrams each explaining units of encoding;
FIG. 2 is a diagram showing a preferred encoding apparatus configuration;
FIG. 3 is a diagram showing a preferred configuration of a bit rate proportion control block;
FIG. 4 is a diagram showing another preferred configuration of the bit rate proportion control block;
FIG. 5 is a diagram showing a preferred decoding apparatus configuration;
FIG. 6 is a diagram showing operations of the encoding apparatus;
FIG. 7 is a diagram showing operations of the decoding apparatus;
FIG. 8 is a diagram showing a configuration of another preferred encoding apparatus;
FIG. 9 is a diagram showing a configuration of another preferred decoding apparatus;
FIG. 10 is a diagram showing operations in accordance with the configuration of another preferred encoding apparatus;
FIG. 11 is a diagram showing operations in accordance with the configuration of the another preferred decoding apparatus;
FIG. 12 is a diagram showing a preferred computer configuration for carrying out the invention;
FIG. 13 is a flowchart explaining the encoding operations; and
FIG. 14 is a flowchart explaining the decoding operations.

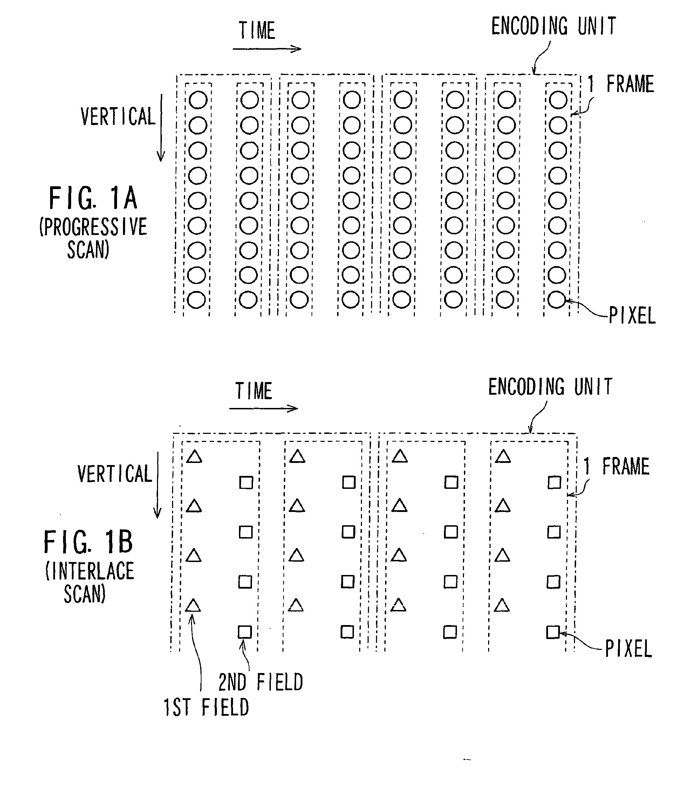

The present invention now is described fully hereinafter through preferred embodiments of the invention and with reference to the accompanying drawings. In this invention, in order to enable edition with high precision while enhancing encoding efficiency, encoding is performed in units of two frames, that is, encoding is performed on a two-frame basis, as is shown in FIGS. 1A and 1B. For, for example, progressive scan image signals, encoding is performed in units of two frames as shown in FIG. 1A. For interlace scan image signals, image signal encoding is performed in four fields (= two frames) as shown in FIG. 1B. From the image signals in a first frame and a second frame which are units of encoding, a sum signal of the frames and a frame-to-frame difference signal are generated per pixel. Encoding is performed for the thus generated sum and difference signals. This encoding is controlled, based on the sum and difference signals. The signals encoded on a two-frame basis, wherein compression has been completed in the two frames, are generated. The present invention includes decoding of the encoded signals obtained by this encoding on a two-frame basis.

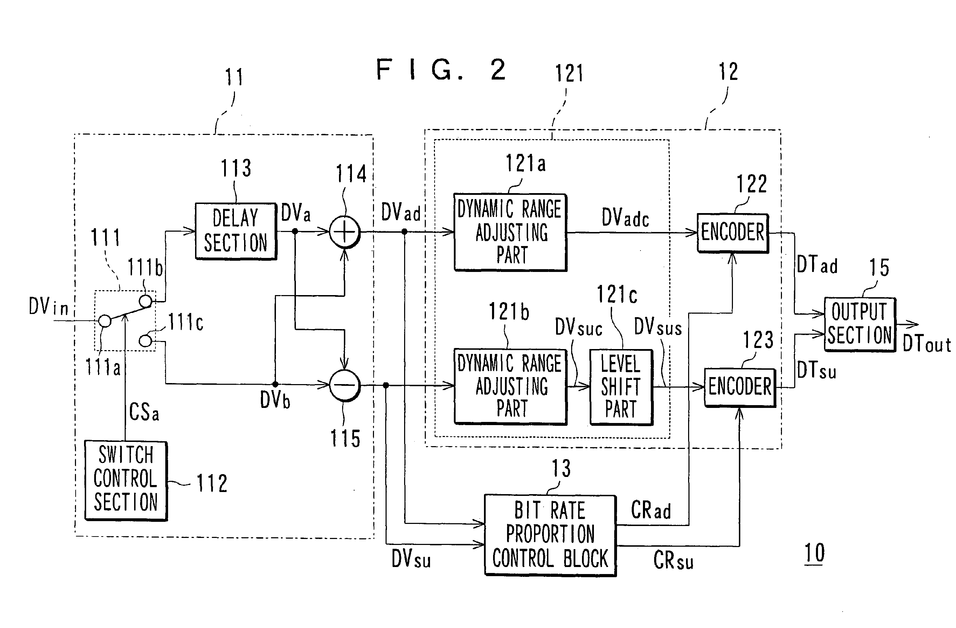

FIG. 2 shows a preferred configuration of an encoding apparatus 10. An input image signal DVin is supplied to a toggle terminal 111a of a signal switch section 111. The signal switch section 111 is a constituent element of an arithmetic block 11. A terminal 111b of the signal switch section 111 is connected to a delay section 113. A terminal 111c thereof is connected to an adder 114 and a subtracter 115. The toggle terminal 111a is alternately connected to the terminal 111b or the terminal 111c by a switch control signal CSa from a signal switch control section 112. The signal switch control section 112 generates the switch control signal CSa. The switch control signal CSa allows the input image signal DVin that is a first frame image signal to be supplied to the terminal 111b of the signal switch section 111. The switch control signal CSa also allows the input image signal DVin that is a second frame image signal to be supplied to the terminal 111c.

The delay section 113 receives the first frame image signal via the signal switch section 111 and delays it by one frame period. The delay section 113 then supplies the delayed signal as an image signal DVa to the adder 114 and the subtracter 115.

The adder 114 receives the image signal DVa from the delay section 113 and an image signal DVb that is the second frame image signal via the signal switch section 111 and adds them at pixel positions corresponding to each other. The adder 114 also supplies a sum signal DVad thus obtained to a signal level adjusting section 121 in an encoding block 12 and a bit rate proportion control block 13. The subtracter 115 receives the image signal DVa and the image signal DVb and subtracts one from the other at pixel positions corresponding to each other. The subtracter 115 also supplies a difference signal DVsu thus obtained to the signal level adjusting section 121 and the bit rate proportion control block 13.

Because the connection of the toggle terminal 111a of the signal switch section 111 alternates between the terminal 111b and the terminal 111c on a per-frame basis by the switch control signal CSa, the sum signal DVad and the difference signal DVsu are sequentially generated for every two frames.

A dynamic range adjusting part 121a of the signal level adjusting section 121 adjusts the level of the sum signal DV ad according to the dynamic range of the input of an encoder 122 connected to the dynamic range adjusting part 121a. For example, if the dynamic range of the input of the encoder 122 is equal to the dynamic range of the input image signal DVin, then the dynamic range of the sum signal DVad doubles that of the input image signal DVin. Therefore, the sum signal DVad level is adjusted to a factor of 0.5 in the dynamic range adjusting part 121a. The encoder 122 receives a sum signal DVadc having the thus adjusted signal level.

A dynamic range adjusting part 121b adjusts the level of the difference signal DVsu according to the dynamic range of the input of an encoder 123, which will be described later, in the same way as the dynamic range adjusting part 121 a does. For example, if the dynamic range of the input of the encoder 123 is equal to the dynamic range of the input image signal DVin, then the dynamic range of the difference signal DVsu doubles that of the input image signal DVin. Therefore, the dynamic range adjusting part 121b adjusts the level of the difference signal DVsu to a factor of 0.5. A difference signal DVsuc having the thus adjusted signal level is supplied to a level shift part 121c.

The level shift part 121c receives the difference signal DVsuc and offsets the level of the difference signal DVsuc according to the signal level of the input of the encoder 123 connected to the level shift part 121c. The difference signal DVsu results from the subtraction of one of the image signal DVb and the image signal DVa from the other. Thus, if a minimum value of "0" and a maximum value of "L" are set for the image signals DVa and DVb, then the difference signal DVsu has a "±L" signal level range. If the dynamic range adjusting part 121 b reduces the level of the difference signal DVsu by a factor of two, then the difference signal DVsuc having the thus adjusted signal level has a "±L/2" signal level range. Therefore, when the difference signal DVsuc is offset by adding an offset value H (= L/2) to it, a difference signal DVsus which has thus been offset has a "0 to L" signal level range which is the same range of the levels of the image signals DVa and DVb. For example, when the input image signal DVin is an 8-bit signal, by adding a offset value H of"128" to the difference signal DVsuc, the signal level range of the offset difference signal DVsus can be made equal to that of the input image signal After the difference signal DVsuc is thus offset by adding the offset value H to it, the offset difference signal DVsus is supplied to the encoder 123.

The encoders 122 and 123 make an adjustment of encoding bit rates for encoding the sum and difference signals, based on control signals from the bit rate proportion control block 13, which will be described later. A commonly applied encoding algorithm or an original encoding algorithm may be used.

The encoder 122 encodes the sum signal DVadc, using an encoding bit rate which is set, based on a control signal CRad from the bit rate proportion control block 13, thereby generating an encoded signal DTad. A commonly applied encoding method such as, for example, DV and Motion-JPEG 2000 may be used. An encoding method by a completely original algorithm may be also performed. The encoded signal DTad generated by the encoder 122 is supplied to an output section 15.

The encoder 123 encodes the difference signal DVsus, using an encoding bit rate which is set, based on a control signal CRsu from the bit rate proportion control block 13, thereby generating an encoded signal DTsu. The encoder 123 should carry out encoding in the same manner as the encoder 122 does. The encoded signal DTsu thus generated by the encoder 123 is also supplied to the output section 15.

The bit rate proportion control block 13 determines the proportion of the encoding bit rates for one encoded signal DTad which is generated by the encoder 122 and the other encoded signal DTsu which is generated by the encoder 123, based on the sum signal and the difference signal to be encoded in the encoding bock 12. The control block 13 generates the control signal CRad to control the encoding operation such that the sum signal is encoded by the encoding bit rate proportion determined for the sum signal and supplies the control signal CRad to the encoder 122. Also, the control block 13 generates the control signal CRsu to control the encoding operation such that the difference signal is encoded by the encoding bit rate proportion determined for the difference signal and supplies the control signal CRsu to the encoder 123. Through determination of the proportion of the encoding bit rates, the control signals CRad and CRsu are generated so that a higher encoding bit rate is assigned to the signal containing more information.

When the sum signal and the difference signal contains more information, the signal has greater signal level variation and wider signal level distribution. The encoded signal also contains more data. Thus, taking advantage of such characteristics, the control signals CRad and CRsu are generated so that a higher encoding bit rate is assigned to the signal containing more information.

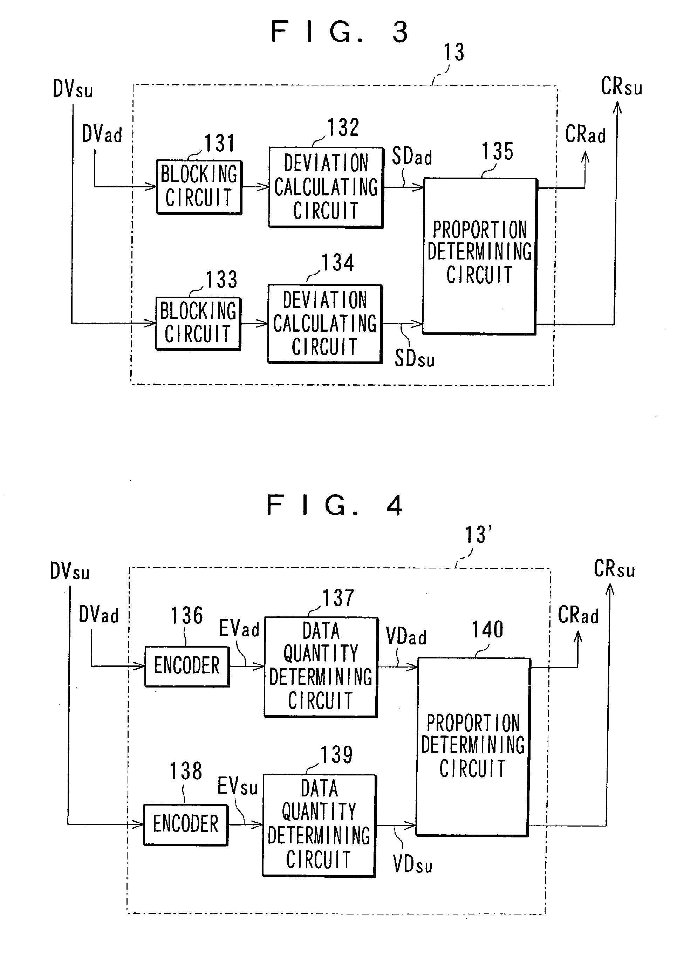

FIG. 3 shows a preferred configuration of the bit rate proportion control block 13 using signal level variation to judges whether or not the signal contains more information. A blocking circuit 131 decomposes the sum signal DVad into blocks and supplies the image signal components of the blocks to a deviation calculating circuit 132. For example, the sum signal VDad is divided into small blocks consisting of eight horizontal pixels by eight vertical pixels. The image signal components of the blocks are supplied to the deviation calculating circuit 132. The deviation calculating circuit 132 calculates a value of standard deviation of each block using the signal levels of the pixels constituting the block. Then, using the calculated standard deviation values of all the blocks, the deviation calculating circuit 132 calculates average standard deviation SDad for one screen and supplies the calculated SDad to a proportion determining circuit 135.

A blocking circuit 133 decomposes the difference signal DVsu into blocks as the blocking circuit 131 does and supplies the image signal components of the blocks to a deviation calculating circuit 134. The deviation calculating circuit 134 calculates average standard deviation SDsu in the same manner as the deviation calculating circuit 132 does and supplies the calculated SDsu to the proportion determining circuit 135.

The proportion determining circuit 135 determines as the encoding bit rate proportion a ratio between the average standard deviation SDad calculated by the deviation calculating circuit 132 and the average standard deviation SDsu calculated by the deviation calculating circuit 134. Then, the proportion determining circuit 135 generates the control signals CRad and CRsu, based on the determined proportion. The proportion determining circuit 135 also supplies the control signal CRad to the encoder 122 and the control signal CRsu to the encoder 123.

In order to judge whether or not the signal contains more information, the data quantities of encoded signals which are obtained through pre-encoding may be used so that the encoding bit rate assignments can be more optimized. FIG. 4 shows another preferred configuration of the bit rate proportion control block 13' for generating the control signals CRad and CRsu, based on the data quantities of the pre-encoded signals.

An encoder 136 encodes the sum signal DVad and supplies the thus encoded signal EVad to a data quantity determining circuit 137. The data quantity determining circuit 137 determines the data quantity of the encoded signal EVad and supplies a data quantity signal VDad indicating a result of the determination to a proportion determining circuit 140.

An encoder 138 encodes the difference signal DVsu and supplies thus encoded signal EVsu to a data quantity determining circuit 139. The data quantity determining circuit 139 determines the data quantity of the encoded signal EVsu. The data quantity determining circuit 139 also supplies a data quantity signal VDsu indicating a result of determination to the proportion determining circuit 140.

The proportion determining circuit 140 determines as the encoding bit rate proportion a ratio between the data quantities of both the encoded signals, based on the data quantity signal VDad from the data quantity determining circuit 137 and the data quantity signal VDsu from the data quantity determining circuit 139. Then, the proportion determining circuit 140 generates the control signals CRad and CRsu, based on the determined proportion, and supplies the control signal CRad to the encoder 122 and the control signal CRsu to the encoder 123.

While the bit rate proportion control blocks 13 and 13' have determined the encoding bit rate proportion, using the sum signal DVad and the difference signal DVsu, these blocks may determine the encoding bit rate proportion in the same manner as described above, using the sum signal DVadc and the difference signal Dvsus which have the adjusted signal levels, respectively.

Moreover, the bit rate proportion control blocks 13 and 13' may determine the encoding bit rate proportion, based on the sum and difference signals from the current encoding unit to a predetermined encoding unit subsequent to the current one. They may change over between the encoding bit rate proportion whenever a predetermined number of encoding units is finished.

The output section 15 shown in FIG. 2 generates an output signal DTout, using the encoded signal DTad and the encoded signal DTsu. When recording the output signal on a recording medium or transmitting the output signal through a wireless or wired transmission channel, further processing such as adding error detection and correction codes, formatting in accordance with the recording medium or transmission protocol, and bit streaming may be performed, if necessary. Thus, the output signal DTout is generated. Different output signals may be generated from the encoded signal DTad and from the encoded signal DTsu separately.

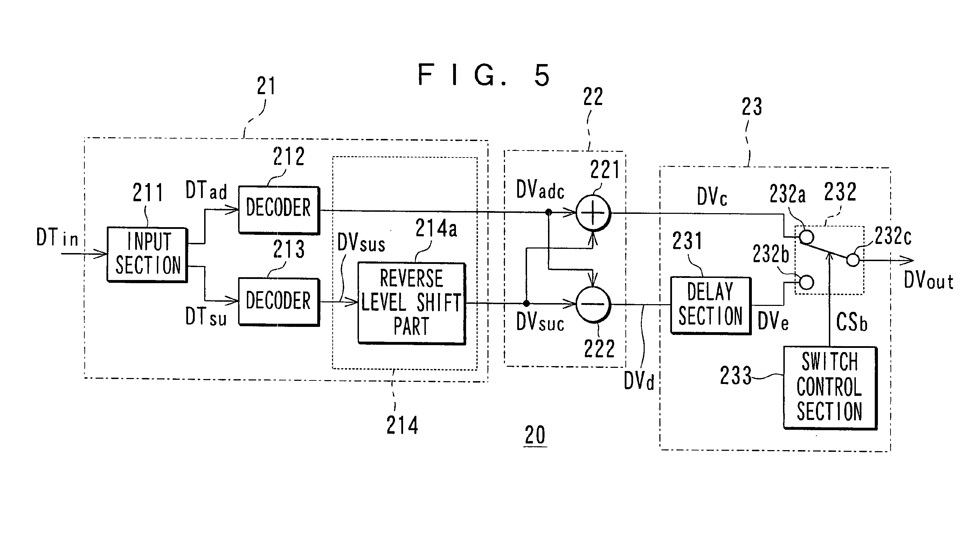

Next, Fig. 5 shows a preferred configuration of a decoding apparatus 20 for decoding the encoded signal received from the encoding apparatus 10. An input section 211 in a decoding block 21 receives as an input signal DTin the reproduction signal reproduced from a recording medium or a received signal distributed through a wired or wireless channel. This input signal DTin is equivalent to the output signal DTout output from the encoding apparatus 10.

The input section 211 decomposes the input signal DTin into an encoded signal DTad and an encoded signal DTsu and supplies the encoded signal DTad to a decoder 212 and the encoded signal DTsu to a decoder 213. The input section 211 may decompose the input signal into the encoded signal DTad and the encoded signal DTsu, using header information or parsing the encoded signals. The input section 211 may carry out error detection and correction for the encoded signal DTad and the encoded signal DTsu.

The decoder 212 decodes the encoded signal DTad into the sum signal DVadc. The sum signal DVadc is then supplied to an adder 221 and a subtracter 222 in an arithmetic block 22. This decoding corresponds to the encoding performed by the encoder 122. When the encoding that is used in, for example, DV format compliant video tape recorders is performed in the encoder 122 shown in FIG. 2, decoding corresponding to this encoding allows the signal before being encoded to be reproduced.

The decoder 213 decodes the encoded signal DTsu into the difference signal DVsus. The difference signal DVsus is then supplied to a reverse level shift part 214a in a signal level adjusting section 214. This decoding corresponds to the encoding performed by the encoder 123 shown in FIG. 2.

The reverse level shift part 214a offsets the level of difference signal DVsus in the reverse direction to cancel the offset given by the level shift section 121c shown in FIG. 2, thus reproducing the difference signal DVsuc before being offset. This difference signal DVsuc is supplied to the adder 221 and the subtracter 222.

The sum signal DVadc to be supplied from the decoder 212 to the arithmetic block 22 and the difference signal DVsuc to be supplied from the reverse level shift part 214a to the arithmetic block 22 are timed. The adder 221 in the arithmetic block 22 then adds the sum signal DVadc supplied from the decoder 212 and the difference signal DVsuc supplied from the reverse level shift part 214a at their corresponding pixel positions. An image signal DVc obtained by this addition is supplied to the terminal 232a of a signal switch section 232 in an output block 23. The subtracter 222 subtracts any one of the sum signal DVadc and the difference signal DVsuc from the other at their corresponding pixel positions. An image signal DVd obtained by this subtraction is supplied to a delay section 231 in the output block 23. Through the above-described arithmetic processing, image signal of two frame is reproduced from the sum signal of one frame and the difference signal of one frame.

The delay section 231 in the output block 23 delays the image signal DVd by one frame period and supplies this delayed signal as an image signal DVe to the terminal 232b of the signal switch section 232.

The signal switch section 232 receives a switch control signal CSb from a signal switch control section 233 and switches the connection of its toggle terminal 232c alternating between the terminal 232a and the terminal 232b, based on the switch control signal CSb. The signal selected by this signal switch section 232 is then output as an output image signal DVout.

The signal switch control section 233 generates and supplies the switch control signal CSb to the signal switch section 232. The switch control signal CSb causes the toggle terminal 232c of the signal switch section 232 to connect to the terminal 232a at the timing when the image signal DVc is supplied from the adder 221 to the terminal 232a of the signal switch section 232. The switch control signal CSb also causes the toggle terminal 232c of the signal switch section 232 to connect to the terminal 232b at the timing when the image signal DVe is supplied from the delay section 231 to the terminal 232b of the signal switch section 232.

The image signal DVd is delayed by one frame period through the delay section 231 and output as the image signal DVe, and the image signal DVc and the image signal DVe are alternately selected by the switch operation of the signal switch section 232. By this operation, the image signals of two frames can be output in a predetermined frame sequence and the output image signal DVout equivalent to the input image signal DVin which has been input to the encoding apparatus 10 can be obtained.

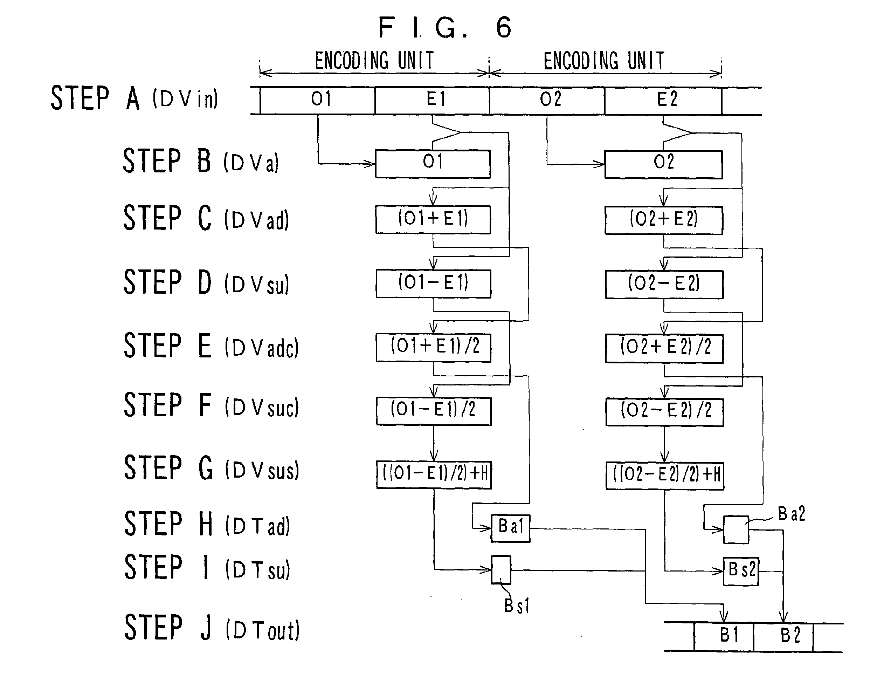

FIG. 6 is a diagram for showing the operations of the encoding apparatus 10. Note that FIG. 6 and FIGS. 7, 10 and 11, which will be described later, are intended to explain the operations of sequentially generating the signals in the encoding apparatus and the decoding apparatus, wherein no consideration is taken for actual timing of generating the signals. When the input image signal DVin, which is shown in step A, is input to the encoding apparatus 10, the signal switch section 111 operates such that the DVin signal is passed to the delay section 113 if it is a first frame signal and passed to the subtracter 115 if it is a second frame signal. In the image signal DVa output from the delay section 113, the first frame signal "O1" synchronizes with the second frame signal "E1," as is shown in step B. The adder 114 adds the first frame signal "O1" and the second frame signal "E1," thus generating the sum signal DVad (= "O1 + E1") as shown in step C. The subtracter 115 subtracts, for example, the second frame signal "E1" from the first frame signal "O1," thus generating the difference signal DVsu (= "O1 - E1") as shown in step D.

The dynamic range adjusting part 121a of the signal level adjusting section 121 reduces the sum signal DVad level, e.g., by a factor of two, thus generating the sum signal DVadc (= "(O1 + E1)/2") as shown in step E. Similarly, the dynamic range adjusting part 121b reduces the difference signal DVsu level, e.g., by a factor of two, thus generating the difference signal DVsuc (= "(O1 - E1)/2") as shown in step F.

The level shift part 121c adjusts the level ofthe difference signal DVsuc according to the level of the input of the encoder 123. Specifically, the level shift part 121c adds the offset value H to the difference signal DVsuc, thus generating the difference signal DVsus (= "((O1 - E1)/2) + H") as shown in step G.

The encoder 122 encodes the sum signal DVadc to generate the encoded signal DTad (= "Ba1"), as shown in step H, with the encoding bit rate based on the control signal CRad. Similarly, the encoder 123 encodes the difference signal DVsus to generate the encoded signal DTsu (= "Bs1") as shown in step I. By combining the encoded signals DTad and DTsu thus generated, the output signal DTout (= "B1") is generated as shown in step J.

By processing the next first frame signal "02" and second frame signal "E2" in the same manner as above, the encoded signal DTad (= "Ba2") and the encoded signal DTsu (= "Bs2") are generated. By combining the generated encoded signals DTad and DTsu, the output signal DTout (= "B2") is generated.

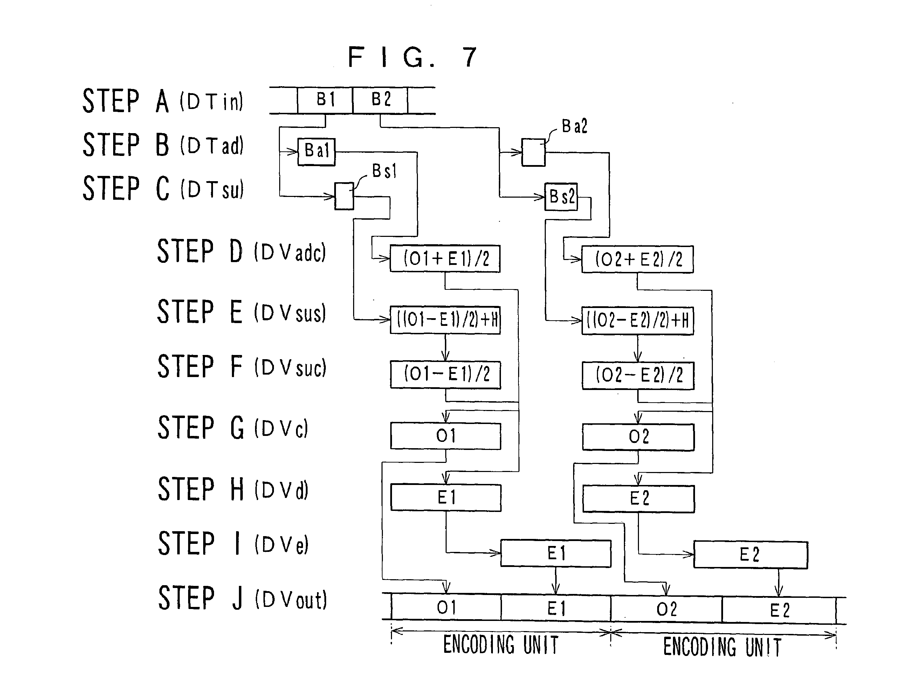

FIG. 7 is a diagram for showing the operations of the decoding apparatus 20. The input signal DTin comprising the encoded signal DTad and the encoded signal DTsu as shown in step A is input to the decoding apparatus 20. The input section 211 then decomposes the input signal DTin (= "B1") into the encoded signal DTad (="Ba1") as shown in step B and the encoded signal DTsu (= "Bs1") as shown in step C.

Through the decoder 212, the encoded signal DTad (="Ba1") is decoded into the sum signal DVadc (= "(O1 + E1)/2") as shown in step D. Through the decoder 213, the encoded signal DTsu (= "Bsl") is decoded into the difference signal DVsus (= "((O1 - E1)/2) + H") as shown in step E.

The reverse level shift part 214a subtracts the offset value H added by the level shift part 121 c in the encoding apparatus 10 from the difference signal DVsus reproduced by the decoder 213. The reverse level shift part 214 then reproduce the difference signal DVsuc (= "(O1 - E1)/2") having the signal level before being offset, as shown in step F.

The adder 221 adds the sum signal DVadc (= "(O1+ E1)/2") and the difference signal DV suc (= "(O1 -E1)/2"), thus reproducing the image signal DVc (= "O1") as shown in step G. The subtracter 222 subtracts the difference signal DVsuc (= "(O1 - E1)/2") from the sum signal DVadc (= "(O1 + E1)/2"), thus reproducing the image signal DVd (= "E1") as shown in step H. Moreover, the delay section 231 delays the image signal DVd (= "E1") by one frame period, thus making the delayed image signal DVe (= "E1") as shown in step I.

As the signal switch section 232 selects the image signal DVc (= "O1") and the image signal DVe (= "E1") in sequence, thereby reproducing the output image signals DVout (= "O1" and "E1") of two frames as shown in step J.

By processing the next input signal DTin (= "B2") in the same manner as above, the output image signals DVout oftwo frames (= "O2" and "E2") can be reproduced. By decoding further input signals DTin sequentially, output image signals DVout can be output sequentially. The output image signals DVout are equivalent to the input image signals DVin used in a generation of the input signals DTin.

In the above-described embodiment, the dynamic range adjusting parts 121a and 121b in the encoding apparatus 10 adjust the levels of the sum signal and the difference signal to reduce by a factor of two. Thus, the image signals having a proper signal level can be obtained simply by addition and subtraction of the sum and difference signals in the arithmetic block 22 in the decoding apparatus 20. In short, this embodiment makes the decoding apparatus configuration simple. In some other embodiment, the encoders 122 and 123 have the same dynamic range of input as those of the sum signal DVad and the difference signal DVsu so that the dynamic range adjustment can not be performed. In this case, the decoding apparatus 20 should include dynamic range adjusting parts for adjusting the dynamic ranges of the sum signal DVadc and the difference signal DVsuc to reduce by a factor of two in the signal level adjusting section 214. This allows the image signals having a proper signal level to be obtained.

Thus, the encoding apparatus 10 performs encoding on a two-frame basis as explained hereinbefore. If the encoding apparatus provides the same image quality as the one obtained by the conventional intra-frame encoding, the bit rate of the output signal DTout can be made lower. If it provides the same bit rate as the conventional one, higher image quality can be obtained.

Because encoded signals are generated on a two-frame basis, the frames of encoded output signals DTout can be edited with higher precision than in the case of long-GOP frames. Simple configurations for encoding and decoding are possible because of no need for heavy load processing such as detecting motion vectors and motion compensation.

Because it is only required that the encoders in the encoding apparatus 10 and the decoders in the decoding apparatus 20 be able to control encoding bit rates, diverse types of image compression techniques can be adopted thereto with ease.

In the above-described embodiment, double encoders and decoders have been used, one for the sum signal, the other for the difference signal. This invention, however, is not limited to this. A single encoder and a single decoder may be alternately used. In this way, the encoding apparatus configuration and the decoding apparatus configuration can be made simpler.

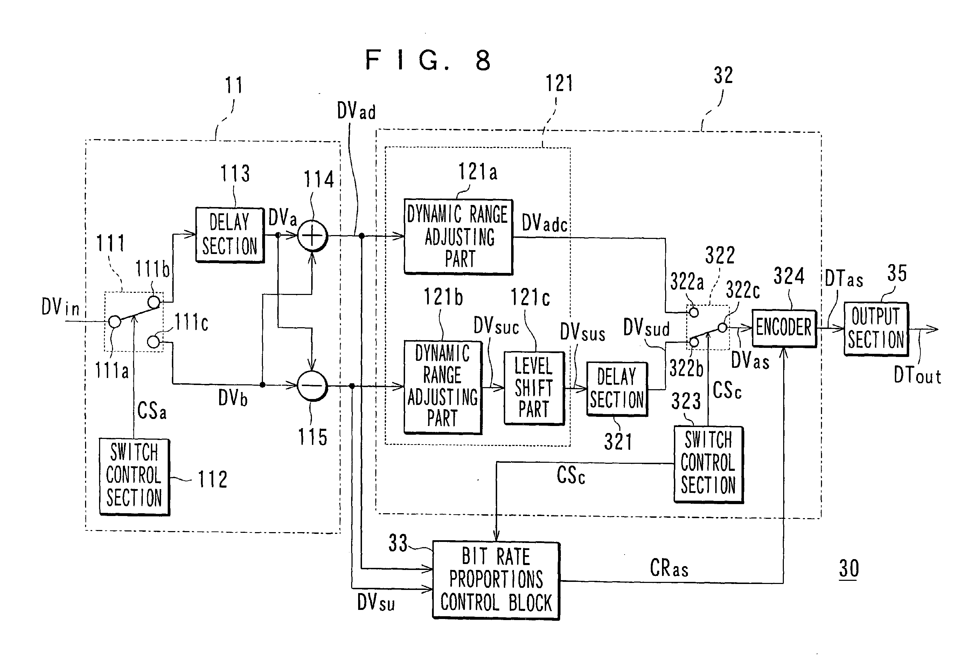

FIG. 8 shows a configuration of another preferred encoding apparatus 30 in which a single encoder is used for both the sum signal and the difference signal. In FIG. 8, like reference numbers referred to components shown in FIG. 2 refer to like components in this preferred embodiment and thus, their explanation is omitted.

The sum signal DVadc output from a dynamic range adjusting part 121a in the encoding block 32 is supplied to the terminal 322a of a signal switch section 322. The difference signal DVsus output from the level shift part 121c is supplied to a delay section 321. The delay section 321 delays the difference signal DVsus by one frame period and supplies a delayed difference signal DVsud to the terminal 322b of the signal switch section 322.

The signal switch section 322 switches the connection of its toggle terminal 322c between the terminal 322a and the terminal 322b, based on a switch control signal CSc received from a signal switch control section 323, and selects the sum signal DVadc or the difference signal DVsud. The signal selected by the signal switch section 322 is supplied as a selected signal DVas to an encoder 324.

The signal switch control section 323 generates the switch control signal CSc to be supplied to the toggle terminal 322c and supplies it to the signal switch section 322. The switch control signal CSc serves as alternative selection of the sum signal DVadc supplied from the dynamic range adjusting part 121a to the terminal 322a of the signal switch section 322 and the difference signal DVsud supplied from the delay section 321 to the terminal 322b of the signal switch section 322.

The encoder 324 encodes the selected signal DVas into an encoded signal DTas and then supplies it to an output section 35. When the selected signal DVas is encoded, the encoded signal DTas is generated at an encoding bit rate based on a control signal CRas supplied from a bit rate proportion control block 33, which will be described later. For encoding by the encoder 324, a commonly applied encoding method or encoding by original algorithm may be carried out, as is the case for the encoders 122 and 123 of the above-described embodiment. For the encoders 122 and 123, if each encoder is able to finish encoding the sum signal or difference signal in the period of one encoding unit, then real-time encoding could have been completed. However, the encoding apparatus 30 use the encoder 324 capable of encoding both the sum and difference signals within the period of one encoding unit in order to complete real-time encoding.

As is the case for the bit rate proportion control block 13 of the above-described embodiment, the bit rate proportion control block 33 also determines a proportion of the encoding bit rates based on the sum signal and the difference signal. The proportion is set between one encoded signal obtained by encoding the sum signal DVadc and the other encoded signal obtained by encoding the difference signal DVsud. Besides, the control block 33 judges which of the sum signal DVadc and the difference signal DVsud is supplied as the selected signal DVas to the encoder 324, based on the switch control signal CSc. The control block 33 then supplies the encoder 324 with the control signal CRas appropriate for the signal to be supplied to the encoder 324. For example, when it is judged that the sum signal DVadc is supplied as the selected signal DVas to the encoder 324, based on the switch control signal CSc, the control block 33 supplies the encoder 324 with a control signal CRad as the control signal CRas. The control signal CRad is equivalent to the control signal CRad generated by the foregoing bit rate proportion control blocks 13 and 13'. When it is judged that the difference signal DVsud is supplied as the selected signal DVas to the encoder 324, based on the switch control signal CSc, the control block 33 supplies the encoder 324 with a control signal CRsu as the control signal CRas. The control signal CRsu is equivalent to the control signal CRsu generated by the foregoing bit rate proportion control blocks 13 and 13'.

The output section 35 generates the output signal DTout from the encoded signal DTas. As is the case for the output section 15, the output section 35 may carry out further processing such as adding error detection and correction codes, formatting in accordance with the recording medium or transmission protocol, and bit streaming, if appropriate, and generate the output signal DTout.

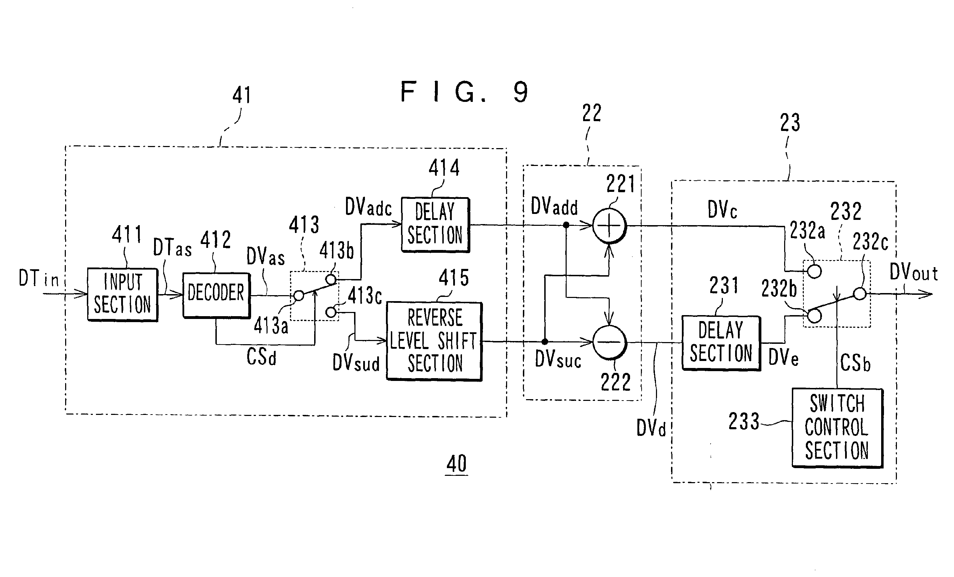

FIG. 9 shows a configuration of another preferred decoding apparatus 40 which decodes the signal output from the encoding apparatus 30. In FIG. 9, like reference numbers referred to components shown in FIG. 5 refer to like components in this preferred embodiment and thus, their explanation is omitted.

An input section 411 in the decoding block 41 extracts the encoded signal DTas from the input signal DTin and supplies the signal DTas to a decoder 412. The input section 411 may carry out error detection and correction for the encoded signal DTas.

The decoder 412 decodes the encoded signal DTas. The selected signal DVas obtained by this decoding is supplied to a toggle terminal 413a of a signal switch section 413. Besides, the decoder 412 generates and supplies a switch control signal CSd to the signal switch section 413. The switch control signal CSd causes the connection of the toggle terminal 413a of the signal switch section 413 to switch to the terminal 413b or terminal 413c in coincidence with the boundary between the sum signal DVadc and the difference signal DVsud based on the selected signal DVas. The boundary between the sum signal DVadc and the difference signal DVsud can be detected using header information, as is the case for the foregoing input section 211, or based on the number of blocks on the basis of EOB codes or the number decoded blocks and the like. Based on the result of the detection, the decoder 412 generates the switch control signal CSd.

The signal switch section 413 switches the connection of the toggle terminal 413a to the terminal 413b or terminal 413c, based on the switch control signal CSd. The signal switch section 413 also supplies the sum signal DVadc component of the selected signal DVas to a delay section 414 and the difference signal DVsud component of the selected signal DVas to a reverse level shift section 415.

The delay section 414 delays the sum signal DVadc by one frame period and supplies a delayed sum signal DVadd to the adder 221 and the subtracter 222. The reverse level shift section 415 in the signal level adjusting section offsets the level of the difference signal DVsud in the reverse direction to cancel the offset given by the level shift part 121c. The reverse level shift section 415 also supplies the thus reproduced difference signal DVsuc having the signal level before being offset to the adder 221 and the subtracter 222.

Integrating the delay section 414 into the circuitry allows the sum signal DVadc and the difference signal DVsuc to be synchronized when the signals are supplied to the adder 221 and the subtracter 222. The adder 221 adds the sum signal DVadc and the difference signal DVsuc at the corresponding pixel positions, thus reproducing the image signal DVc. The subtracter 222 subtracts any one of the sum signal DVadc and the difference signal DVsuc from the other at the corresponding pixel positions, thus reproducing the image signal DVd. Then, as is the case for the foregoing decoding apparatus 20, a delay section 231 receives and delays the image signal DVd by one frame period and supplies a delayed image signal DVe to the terminal 232b of a signal switch section 232. The signal switch section 232 alternately selects and outputs the image signal DVc and the image signal DVe on a per-frame basis. This allows the output image signal DVout equivalent to the input image signal DVin which has been input to the decoding apparatus 30 to be obtained.

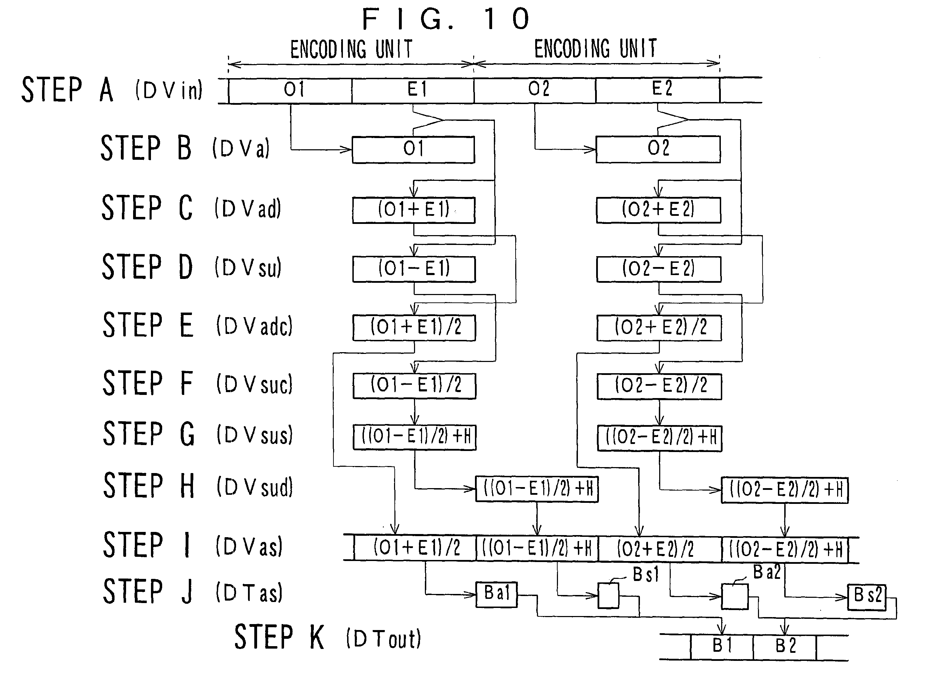

FIG. 10 is a diagram for explaining the operations of the encoding apparatus 30. When the input image signal DVin, which is shown in step A, is input to the encoding apparatus 30, the signal switch section 111 operates such that the DVin signal is passed to the delay section 113 if it is a first frame signal and passed to the subtracter 115 if it is a second frame signal. Consequently, in the image signal DVa output from the delay section 113, the first frame signal "O1" synchronizes with the second frame signal "E1," as shown in step B. The adder 114 adds the first frame signal "O1" and the second frame signal "E1," thus generating the sum signal DVad (= "O1 + E1") as shown in step C. The subtracter 115 subtracts, for example, the second frame signal "E1" from the first frame signal "O1," thus generating the difference signal DVsu (= "O1 - E1") as shown in step D.

The dynamic range adjusting part 121a of the signal level adjusting section 121 reduces the sum signal DVad level, e.g., by a factor of two, thus generating the sum signal DVadc (= "(O1 + E1)/2") as shown in step E. Similarly, the dynamic range adjusting part 121b reduces the level of difference signal DVsu, e.g., by a factor of two, thus generating the difference signal DVsuc (= "(O1 - E1)/2") as shown in step F.

The level shift part 121c adjusts the level of the difference signal DVsuc according to the level of the input of the encoder 324. Specifically, the level shift section 121c adds the offset value H to the difference signal DV suc, thus generating the difference signal DVsus (= "((O1 - E1)/2) + H") as shown in step G.

The delay section 321 delays the difference signal DVsus by one frame period, thus generating a delayed difference signal DVsud as shown in step H.

The signal switch section 322 alternatively selects the sum signal DVadc and the difference signal DVsud per encoding unit and supplies the selected signal DVas as shown in step I to the encoder.

The encoder 324 encodes the selected signal DVas into the encoded signal DTas as shown in step J according to a bit rate proportion which is set, based on the sub signal DVad and the difference signal DVsu. The encoder 324 encodes, for example, the selected signal DVas (= "(O1 + E1)/2") into the encoded signal DTas (= "Ba1") and encodes the selected signal DVas ((= "((O1 - E1)/2) + H") into the encoded signal DTas (= "Bs1"). By combining the encoded signals DTas thus generated, the output signal DTout (= "B1") is generated as shown in step K.

By processing the next first frame signal "O2" and second frame signal "E2" in the same manner as above, the encoded signal DTas (= "Ba2") and the encoded signal DTas (= "Bs2") are generated. By combining the encoded signals DTas thus generated, the output signal DTout (= "B2") is generated.

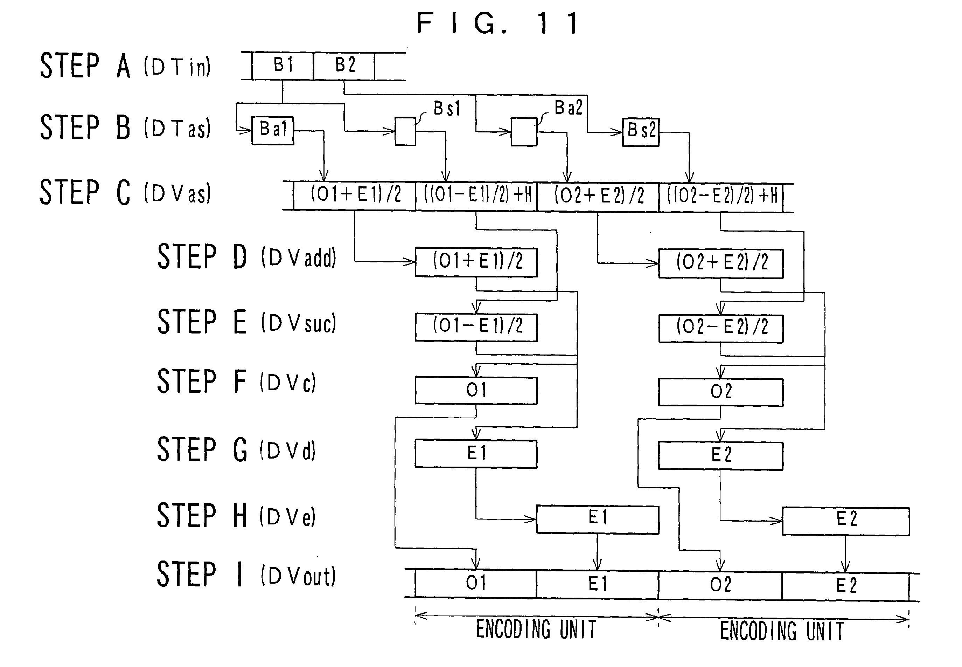

FIG. 11 explains the operations of the decoding apparatus 40. The input signal DTin including the encoded signals DTas is input to the decoding apparatus 40 as shown in step A. The input section 411 decomposes the input signal DTin (= "B1") into the encoded signal DTas (= "Ba1") and the encoded signal DTas (= "Bs1") which as shown in step B and supplies these signals to the decoder 412.

The decoder 412 sequentially decodes the encoded signal DTas (= "Ba1") and the encoded signal DTas (= "Bs1") into the selected signals DVas (= "(O1 + E1)/2") and "((O1 - E1)/2) + H") as shown in step C. The signal switch section 413 extracts the sum signal part from the selected signal DVas sequence and supplies the extracted sum signal DVadc to the delay section 414. The delay section 414 delays the sum signal DVadc by one frame period and supplies the delayed sum signal DVadd which is shown in step D to the adder 211. Also, the signal switch section 413 extracts the difference signal part from the selected signal DVas sequence and supplies the extracted difference signal DVsud (= "((O1 - E1)/2) + H") to the reverse level shift section 415.

The reverse level shift section 415 subtracts the offset value H which has been added by the level shift part 121c in the encoding apparatus 30 from the difference signal DVsud, thus reproducing the difference signal DVsuc (= "(O1 - E1)/2") having the signal level before being offset, as shown in step E.

The adder 221 adds the sum signal DVadc (= "(O1 + E1)/2") and the difference signal DVsuc (= "(O1 - E1)/2"), thus reproducing the image signal DVc (= "O1") as shown in step F. The subtracter 222 subtracts the difference signal DVsuc (= "(O1 - E1)/2") from the sum signal DVadc (= "(O1 + E1)/2"), thus reproducing the image signal DVd (= "E1") as shown in step G. Moreover, the delay section 231 delays the image signal DVd (= "E1") by one frame period and outputs the delayed image signal DVe (= "E1") as shown in step H.

The signal switch section 232 selects the image signal DVc (= "O1") and the image signal DVe (= "E1") in sequence. Thereby, output image signals DVout (= "O1" and "E1") of two frames can be reproduced as shown in step I.

By processing the next input signal DTin (= "B2") in the same manner as above, output image signals DVout (= "02" and "E2") of two frames can be reproduced. By decoding further input signals DTin sequentially, output image signals DVout can be output sequentially. The output image signals DVout are equivalent to the input image signals DVin which have been used for encoding the input signals DTin.

In the manner described above, the encoding apparatus 30 encodes both the sum signal DVadc and the difference signal DVsud with the single encoder 324. The decoding apparatus 40 decodes the encoded signals into the sum signal DVadc and the difference signal DVsud with the single decoder 412. Thus, the encoding apparatus and the decoding apparatus can be fabricated at lower cost, dispensing with double encoders and decoders, one for the sum signal and the other for the difference signal.

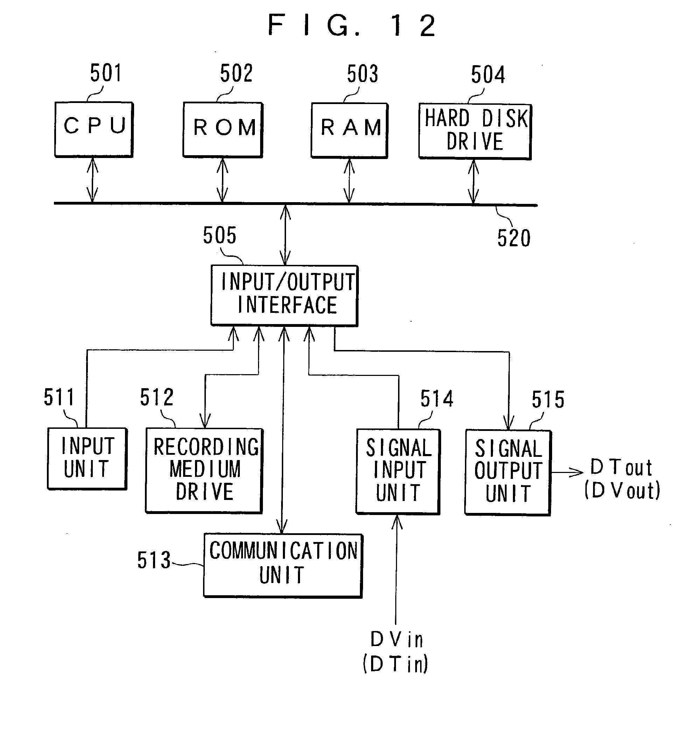

The operations of the foregoing encoding apparatus and decoding apparatus can be implemented by not only hardware but also software. In a preferred computer configuration for carrying out the invention, which is shown in FIG. 12, the computer includes a CPU (Central Processing Unit) 501 to which an ROM 502, an RAM 503, a hard disk drive 504, and I/O interface 505 are connected via a bus 520. To the I/O interface 505, an input unit 511, a recording medium drive 512, a communication unit 513, a signal input unit, and a signal output unit 515 are connected.

When a command is entered from an external device or when a command is entered through the input unit 511 constituted by manual input devices such as a keyboard, mouse, etc. or a voice input device such as a microphone, the command is supplied to the CPU 501 via the I/O interface 505.

The CPU 501 executes a program stored in the ROM 502, the RAM 503, or the hard disk drive 504 and performs a process in response to the supplied command. Programs for causing the computer to carry out the same processing tasks as the foregoing encoding apparatus and decoding apparatus do are stored beforehand into the ROM 502, the RAM 503, or the hard disk drive 504. Based on the programs, the input image signal DVin input to the signal input unit 514 is encoded and output as the output signal DTout from the signal output unit 515. Or the input signal DTin input to the signal input unit 514 is decoded and output as the output signal DVout from the signal output unit 515.

It may also be preferable that the programs be stored on a removable recording medium to be mounted on the computer. In this case, the programs are stored onto the recording medium or the programs are read from the recording medium by the recording medium drive 51 and executed on the computer. Moreover, it may also be preferable that the programs be transmitted or received through a transmission channel by the communication unit 513. In this case, the programs thus received are executed on the computer.

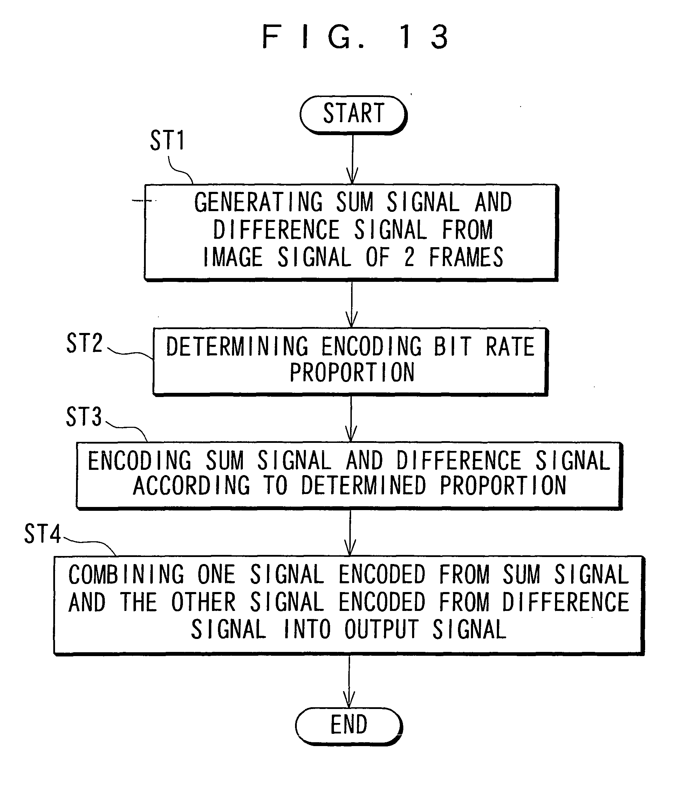

FIG. 13 is a flowchart explaining the encoding operation. In step ST1, from the input image signal DVin input through the signal input unit 514, a sum signal of the frames and a frame-to-frame difference signal are generated per pixel using the image signal of two frames that are an encoding unit. Then, the process proceeds to step ST2.

In step ST2, the proportion of the encoding bit rates for one encoded signal generated by encoding the sum signal and the other encoded signal generated by encoding the difference signal is determined, based on the sum signal and the difference signal. For example, as described above, the sum signal and the difference signal are divided into blocks, respectively, and, from the standard deviation values of the blocks, average standard deviation for one screen is calculated for the sum signal and the difference signal, respectively. A ratio between the average standard deviation obtained for the sum signal and the average standard deviation obtained for the difference signal is determined as the encoding bit rate proportion. Alternatively, the encoding bit rate proportion may be determined by a ratio between the data quantity of one encoded signal obtained by pre-encoding the sum signal and the data quantity of the other encoded signal obtained by pre-encoding the difference signal.

In step ST3, encoding the sum signal and the difference signal is performed according to the encoding bit rate proportion determined in step ST2. For this encoding, a commonly applied encoding method or encoding by an original algorithm may be performed, provided the encoding bit rates can be adjusted.

In step ST4, one encoded signal obtained by encoding the sum signal and the other encoded signal obtained by encoding the difference signal are combined to generate an output signal. The output signal thus generated is then output from the signal output unit 515.

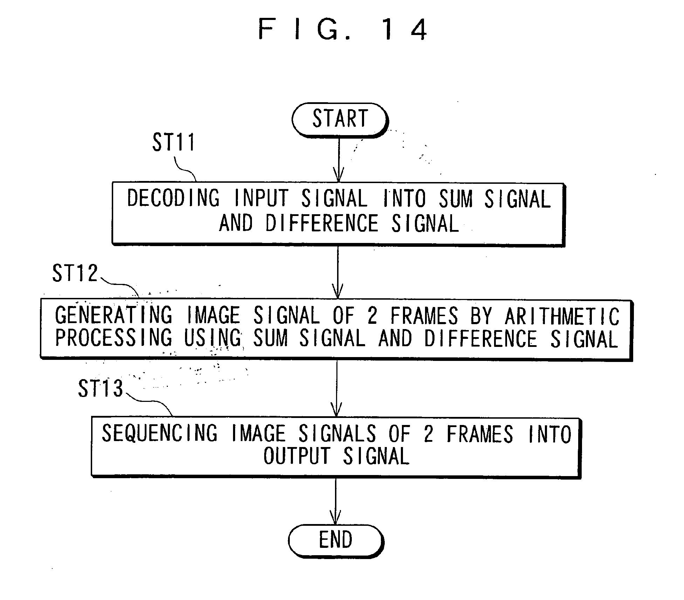

FIG. 14 is a flowchart explaining the decoding operation for decoding the signals generated by the encoding apparatuses shown in FIG. 2 and FIG. 8 and/or the process shown in the flowchart of FIG. 13.

In step ST11, the input signal DTin input through the signal input unit 514 is decoded into the sum signal and the difference signal. Then, the process proceeds to step ST12. In step ST11, a commonly applied decoding method or decoding by an original algorithm, which correspond to the encoding method or algorithm may be performed.

In step ST12, arithmetic processing is performed using the sum signal and the difference signal, thus generating the image signal of two frames. Then, the process proceeds to step ST13.

In step ST13, the generated image signals of two frames are sequenced along the time axis and output as the output image signal DVout from the signal output unit 515.

If the input image signals DVin are interlace scan images, then second field sum signal and difference signal following first field sum signal and difference signal will be supplied to the encoders 122 and 123, the encoder 324, or the encoders 136 and 137. In view hereof, assembling the first and second field image signals into a frame is performed before being supplied to the encoders 122 and 123 or the encoders 136 and 137. By this assembling, the sum signal and difference signal of one frame can be supplied to the encoders 122 and 123 or the encoders 136 and 137. This allows an output signal DTout equal to that of the progressive scan images to be obtained even when the input image signals DVin are interlace scan images.

Thus have been described the apparatus, the method, and the program for encoding and the apparatus, the method, and the program for decoding. While the foregoing specification has described preferred embodiment(s) of the present invention, one skilled in the art may make many modifications to the preferred embodiment without departing from the invention in its broader aspects. The appended claims therefore are intended to cover all such modifications as fall within the true scope of the invention.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A method for encoding a moving video signal comprising a plurality of images, each image having a plurality of pixels, said method comprising steps of:
generating a sum signal and a difference signal of images for every two
frames;
deciding an encoding bit rate for the sum signal and the difference signal based on the sum signal and the difference signal; and
encoding the sum signal and the difference signal respectively based on the encoding bit rate.

2. The method according to claim 1, wherein the step of deciding generates a control signal to be used for the encoding, the control signal representing a proportion of the encoding bit rate for the sum signal and the different signal.

3. The method according to claim 1, wherein the step of deciding decides the encoding bit rate on the basis of a variation in signal level of each pixel of the sum signal and a variation in signal level of each pixel of the different signal.

4. The method according to claim 1, wherein said step of encoding performs the encoding on any one of the sum signal and the different signal and then performs the encoding on the other signal.

5. The method according to claim 1, wherein the step of deciding decides the encoding bit rate on the basis of a proportion of a data quantity generated by encoding the sum signal and a data quantity generated by encoding the different signal.

6. The method according to claim 1, further comprising a step of adjusting a level of any one of the sum signal and the different signal.

7. An apparatus for encoding a moving video signal comprising a plurality of images, each image having a plurality of pixels, said apparatus comprising:
a generating element for generating a sum signal and a difference signal of images for every two frames;
a deciding element for deciding an encoding bit rate for the sum signal and the difference signal based on the sum signal and the difference signal; and
an encoding element for encoding the sum signal and the difference signal respectively based on the encoding bit rate.

8. The apparatus according to claim 7, wherein the deciding element generates a control signal to be used for the encoding element, the control signal representing a proportion of the encoding bit rate for the sum signal and the different signal.

9. The apparatus according to claim 7, wherein the deciding element decides the encoding bit rate on the basis of a variation in signal level of each pixel of the sum signal and a variation in signal level of each pixel of the different signal.

10. The apparatus according to claim 7, wherein said encoding element performs the encoding on any one of the sum signal and the different signal and then performs the encoding on the other signal.

11. The apparatus according to claim 7, wherein the deciding element decides the encoding bit rate on the basis of a proportion of a data quantity generated by encoding the sum signal and a data quantity generated by encoding the different signal.

12. The apparatus according to claim 7, further comprising an adjustment element for adjusting a level of any one of the sum signal and the different signal.

13. A computer program operatable by a computer, the program comprising instruction data to be carried out by the computer, the instruction data comprising:
data to instruct generating a sum signal and a difference signal of images for every two frames;
data to instruct deciding an encoding bit rate for the sum signal and the difference signal based on the sum signal and the difference signal; and
data to instruct encoding the sum signal and the difference signal respectively based on the encoding bit rate.

14. The program according to claim 13, wherein the data to instruct deciding includes generating a control signal to be used for the encoding, the control signal representing a proportion of the encoding bit rate for the sum signal and the different signal.

15. The program according to claim 13, wherein the data to instruct deciding includes deciding the encoding bit rate on the basis of a variation in signal level of each pixel of the sum signal and a variation in signal level of each pixel of the different signal.

16. The program according to claim 13, wherein said data to instruct the encoding instructs encoding any one of the sum signal and the different signal and then instructs encoding the other signal.

17. The program according to claim 13, wherein the data to instruct deciding includes deciding the encoding bit rate on the basis of a proportion of a data quantity generated by encoding the sum signal and a data quantity generated by encoding the different signal.

18. The program according to claim 13 further comprising data to adjust a level of any one of the sum signal and the different signal.

19. A method for decoding encoded data by encoding a moving video signal comprising a plurality of images, each image having a plurality of pixels, the encoded data comprising an encoded sum signal generated by encoding a sum signal of images and an encoded different signal generated by encoding a different signal of images, the sum signal and the difference signal of images being generated for every two frames, the method comprising steps of:
decoding the encoded data to generate a decoded sum signal and a decoded different signal;
generating two-frame images using the decoded sum signal and the decoded different signal; and
outputting the two-frame images in a prescribed order to generate a decoded moving video signal.

20. An apparatus for decoding encoded data by encoding a moving video signal comprising a plurality of images, each image having a plurality of pixels, the encoded data comprising an encoded sum signal generated by encoding a sum signal of images and an encoded different signal generated by encoding a different signal of images, the sum signal and difference signal of images being generated for every two frames, the apparatus comprising:
an element for decoding the encoded data to generate a decoded sum signal and a decoded different signal;
an element for generating two-frame images using the decoded sum signal and the decoded different signal; and
an element for outputting the two-frame images in a prescribed order to generate a decoded moving video signal.

21. A computer program operatable by a computer, the program comprising instruction data to be carried out by the computer, the instruction data including decoding encoded data by encoding a moving video signal comprising a plurality of images, each image having a plurality of pixels, the encoded data comprising an encoded sum signal generated by encoding a sum signal of images and an encoded different data generated by encoding a different signal of images, the sum signal and difference signal of images being generated for every two frames, the instruction data further comprising:
data to instruct decoding the encoded data to generate a decoded sum signal and a decoded different signal;
data to instruct generating two-frame images using the decoded sum signal and the decoded different signal; and
data to instruct outputting the two-frame images in a prescribed order to generate a decoded moving video signal.
